# EUROPEAN PATENT APPLICATION

(11) **EP 4 552 809 A1**
(43) Date of publication of application: **14.05.2025**
(21) Application number: 24209996.8
(22) Date of filing: 30.10.2024
(51) Int. Cl.: B25J 9/16, B25J 9/00, G05B 19/423, B25J 13/08

(54) **ROBOT SYSTEM, ROBOT, AND ROBOT CONTROL METHOD**

(30) Priority: 08.11.2023 JP 2023190797
(71) Applicant: Kabushiki Kaisha Yaskawa Denki, Kitakyushu-shi, Fukuoka 806-0004 (JP)
(72) Inventor: SOTOBAYASHI, Kyoko, Kitakyushu-shi, 8060004 (JP); NISHIMURA, Takashi, Kitakyushu-shi, 8060004 (JP); KANOMATA, Tomoyuki, Kitakyushu-shi, 8060004 (JP); NINOMIYA, Takeyuki, Kitakyushu-shi, 8060004 (JP)
(74) Representative: Novagraaf International SA

(57) **Abstract**

Object

To provide a robot system (1), a robot (3), and a robot control method capable of improving the operability of a robot (3).

Solution to Problem

A robot system (1) includes a robot (3) and a controller (5) configured to control the robot (3). The robot (3) includes an arm (13) and a strip-shaped switch (25) configured to allow an operation at a plurality of locations in a direction of circling around an outer periphery of the arm (13), and allow the controller (5) to cause the robot (3) to be in an operable state based on the operation when an operator performs the operation.

## Description

### TECHNICAL FIELD

Embodiments of the disclosure relate to a robot system, a robot, and a robot control method.

### BACKGROUND ART

Patent Literature 1 discloses a six-axis vertical articulated robot that performs cooperative work with an operator. The robot has an input switch at a distal end portion thereof that allows an operator who cooperates with the robot to input various signals to the robot.

### CITATION LIST

### PATENT LITERATURE

Patent Literature 1: JP 2019-177432 A

### SUMMARY OF INVENTION

### TECHNICAL PROBLEM

The robot according to the related art includes an input switch to be operated by an operator, and there is room for further improvement in operability.

The present invention has been made in light of such an issue and is directed at providing a robot system, a robot, and a robot control method capable of improving the operability of a robot.

### SOLUTION TO PROBLEM

In order to address the above issue, an aspect of the present invention provides a robot system including: a robot; and a controller configured to control the robot, in which the robot includes: an arm; and a first operation unit configured to allow an operation at a plurality of locations in a direction of circling around an outer periphery of the arm, and allow the controller to cause the robot to be in a movable state based on the operation when an operator performs the operation.

Another aspect of the present invention provides a robot to be controlled by a controller, including: an arm; and a first operation unit configured to allow an operation at a plurality of locations in a direction of circling around an outer periphery of the arm, and allow the controller to cause the robot to be in a movable state based on the operation when an operator performs the operation.

Another aspect of the present invention provides a method of controlling a robot, including, when an operator performs an operation on a first operation unit, causing the robot to be in a movable state based on the operation, the first operation unit allowing the operation at a plurality of locations in a direction of circling around an outer periphery of an arm included in the robot.

### ADVANTAGEOUS EFFECTS OF INVENTION

According to the robot system and the like of the present invention, it is possible to improve the operability of a robot.

### BRIEF DESCRIPTION OF DRAWINGS

FIG. 1 illustrates an example of the configuration of a robot system and a robot according to an embodiment.
FIG. 2 is an enlarged perspective view illustrating the vicinity of a distal end portion of an arm, illustrating an example of the configuration of a strip-shaped switch.
FIG. 3 is an enlarged perspective view illustrating the vicinity of the distal end portion of the arm when viewed from another angle, illustrating the example of the configuration of the strip-shaped switch.
FIG. 4 is an enlarged perspective view illustrating the vicinity of the distal end portion of the arm, illustrating an example of a state in which the strip-shaped switch has been removed.
FIG. 5 is a cross-sectional view illustrating an example of the cross-sectional structure of a groove portion for accommodating the strip-shaped switch.
FIG. 6 is a cross-sectional view illustrating an example of the cross-sectional structure of a recess for accommodating a fixing member for the strip-shaped switch.
FIG. 7 is a plan view illustrating an example of the overall configuration of the strip-shaped switch.
FIG. 8 is a plan view illustrating an example of the configuration of the fixing member for the strip-shaped switch.
FIG. 9 is an enlarged perspective view illustrating the vicinity of the distal end portion of the arm, illustrating an example of the configuration of a function button.
FIG. 10 is an enlarged perspective view illustrating the vicinity of the distal end portion of the arm, illustrating an example of a connector provided on the arm and a cable connected to an end effector.
FIG. 11 illustrates an example of a case where a camera is attached to an attachment portion provided in the vicinity of the distal end portion of the arm.
FIG. 12 illustrates an example of the configuration of the distal end portion of the arm when viewed from a rotation axis direction of a flange portion.
FIG. 13 is a block diagram illustrating an example of the functional configuration of a controller.
FIG. 14 is a block diagram illustrating an example of the hardware configuration of the controller.

### DESCRIPTION OF EMBODIMENTS

Embodiments will be described below with reference to the drawings.

### 1. Configuration of Robot System

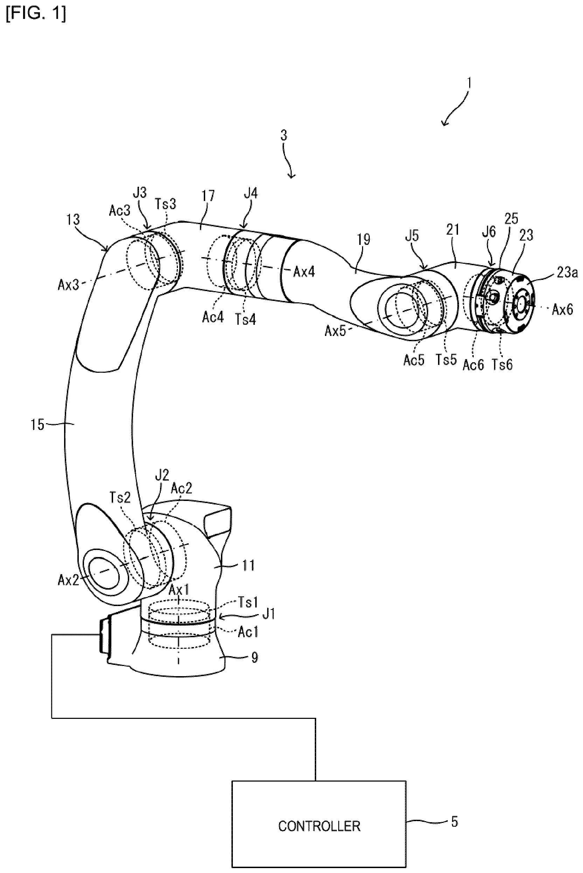

An example of the configuration of a robot system according to an embodiment will be described with reference to FIG. 1. FIG. 1 illustrates an example of the configuration of a robot system and a robot according to an embodiment.

As illustrated in FIG. 1, a robot system 1 includes a robot 3 and a controller 5.

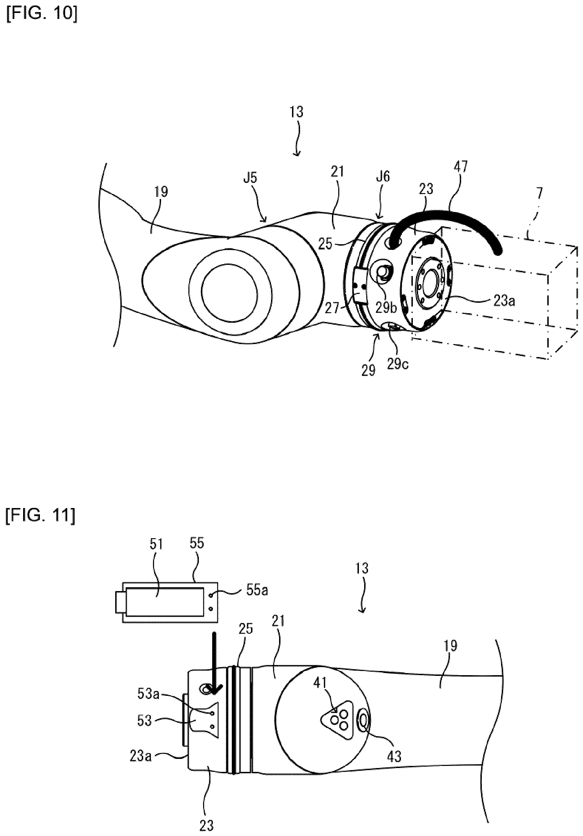

The robot 3 is configured as a vertical articulated six-axis robot including six joint portions J1 to J6, for example, and an end effector 7 (see FIG. 10 to be described later) corresponding to work is attached to a distal end portion 23a. The end effector 7 is a robot hand or the like, for example. The robot 3 may be a robot with axes other than six axes (for example, five axes, seven axes, or the like). The robot 3 may also be a robot other than the vertical articulated type, such as a robot of a horizontal articulated type or a parallel link robot.

The controller 5 controls the robot 3. The controller 5 may include a personal computer (PC), a motion controller, a programmable logic controller (PLC), or the like, for example. The controller 5 may be disposed integrally with the robot 3 or may be disposed separately from the robot 3. When the controller 5 is disposed separately from the robot 3, the controller 5 may be connected to the robot 3 by a cable or wirelessly. The controller 5 may be configured as a single device or may be configured by a plurality of devices.

### 2. Configuration of Robot

An example of the configuration of the robot 3 will be described with reference to FIG. 1.

As illustrated in FIG. 1, the robot 3 includes a base 9, a turning portion 11, and an arm 13. The base 9 is fixed to a floor or a stand, for example.

The turning portion 11 is supported at an upper end portion of the base 9 so as to be turnable around a rotation axis Ax1 parallel to the vertical direction. The turning portion 11 is driven to turn around the rotation axis Ax1 with respect to the upper end portion of the base 9 by driving of an actuator Ac1 provided in a joint portion J1 that rotatably couples the base 9 and the turning portion 11 adjacent to each other. The actuator Ac1 includes a torque sensor Ts1 that detects torque around the rotation axis Ax1 between the base 9 and the turning portion 11. A detection value of the torque sensor Ts1 is transmitted to the controller 5.

The arm 13 is supported by a side portion on one side of the turning portion 11, for example. The arm 13 includes a lower arm portion 15, an elbow portion 17, an upper arm portion 19, a wrist portion 21, and a flange portion 23. The lower arm portion 15, the elbow portion 17, the upper arm portion 19, the wrist portion 21, and the flange portion 23 are examples of a link.

The lower arm portion 15 is supported by a side portion on one side of the turning portion 11 so as to be turnable around a rotation axis Ax2 perpendicular to the rotation axis Ax1. The lower arm portion 15 is driven to turn around the rotation axis Ax2 with respect to a side portion on one side of the turning portion 11 by driving of an actuator Ac2 provided in a joint portion J2 that rotatably couples the turning portion 11 and the lower arm portion 15 adjacent to each other. The actuator Ac2 includes a torque sensor Ts2 that detects torque around the rotation axis Ax2 between the turning portion 11 and the lower arm portion 15. A detection value of the torque sensor Ts2 is transmitted to the controller 5.

The elbow portion 17 is supported at a distal end portion of the lower arm portion 15 so as to be turnable about a rotation axis Ax3 parallel to the rotation axis Ax2. The elbow portion 17 is driven to turn around the rotation axis Ax3 with respect to the distal end portion of the lower arm portion 15 by driving of an actuator Ac3 provided in a joint portion J3 that rotatably couples the lower arm portion 15 and the elbow portion 17 adjacent to each other. The actuator Ac3 includes a torque sensor Ts3 that detects torque around the rotation axis Ax3 between the lower arm portion 15 and the elbow portion 17. A detection value of the torque sensor Ts3 is transmitted to the controller 5.

The upper arm portion 19 is supported at a distal end portion of the elbow portion 17 so as to be rotatable about a rotation axis Ax4 perpendicular to the rotation axis Ax3. The upper arm portion 19 is driven to rotate around the rotation axis Ax4 with respect to the distal end portion of the elbow portion 17 by driving of an actuator Ac4 provided in a joint portion J4 that rotatably couples the elbow portion 17 and the upper arm portion 19 adjacent to each other. The actuator Ac4 includes a torque sensor Ts4 that detects torque around the rotation axis Ax4 between the elbow portion 17 and the upper arm portion 19. A detection value of the torque sensor Ts4 is transmitted to the controller 5.

The wrist portion 21 is supported at a distal end portion of the upper arm portion 19 so as to be turnable about a rotation axis Ax5 perpendicular to the rotation axis Ax4. The wrist portion 21 is driven to turn around the rotation axis Ax5 with respect to the distal end portion of the upper arm portion 19 by driving of an actuator Ac5 provided in a joint portion J5 that rotatably couples the upper arm portion 19 and the wrist portion 21 adjacent to each other. The actuator Ac5 includes a torque sensor Ts5 that detect torque around the rotation axis Ax5 between the upper arm portion 19 and the wrist portion 21. A detection value of the torque sensor Ts5 is transmitted to the controller 5.

The flange portion 23 is supported at a distal end portion of the wrist portion 21 so as to be rotatable about a rotation axis Ax6 perpendicular to the rotation axis Ax5. The flange portion 23 is driven to rotate around the rotation axis Ax6 with respect to the distal end portion of the wrist portion 21 by driving of an actuator Ac6 provided in a joint portion J6 that rotatably couples the wrist portion 21 and flange portion 23 adjacent to each other. The actuator Ac6 includes a torque sensor Ts6 that detects torque around the rotation axis Ax6 between the wrist portion 21 and the flange portion 23. A detection value of the torque sensor Ts6 is transmitted to the controller 5.

An end effector 7 (not illustrated in FIG. 1; see FIG. 10) is attached to a distal end portion 23a of the flange portion 23, and rotates around the rotation axis Ax6 together with the rotation of the flange portion 23 around the rotation axis Ax6.

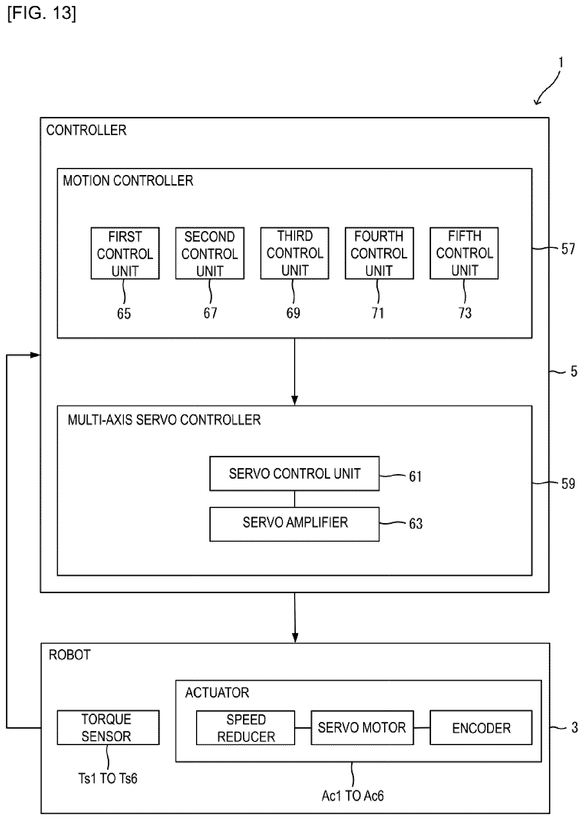

The robot 3 having the above-described configuration is a six-axis robot including the six joint portions J1 to J6 provided with the six actuators Ac1 to Ac6. Each of the actuators Ac1 to Ac6 that drive the joint portions J1 to J6 is configured to include, for example, a servo motor, an encoder, a speed reducer (see FIG. 13), and the like. When the robot 3 receives an external force due to a collision with a person or an object, for example, the robot 3 can immediately stop the operation or escape in a direction opposite to the direction in which the external force acts, by detecting the torque with the torque sensors Ts1 to Ts6 in the joint portions J1 to J6. The robot 3 is configured as a human collaborative robot capable of operating together with an operator.

In the above description, the rotation around the rotation axis along the longitudinal direction (or the extending direction) of the arm 13 is referred to as "rotation", and the rotation around the rotation axis perpendicular to the longitudinal direction (or the extending direction) of the arm 13 is referred to as "turning" for distinction.

The configuration of the robot 3 described above is an example, and is not limited to the contents described above. For example, the robot 3 may be provided with force sensors in addition to or in place of the torque sensors Ts1 to Ts6.

### 3. Configuration of Operation Unit of Arm

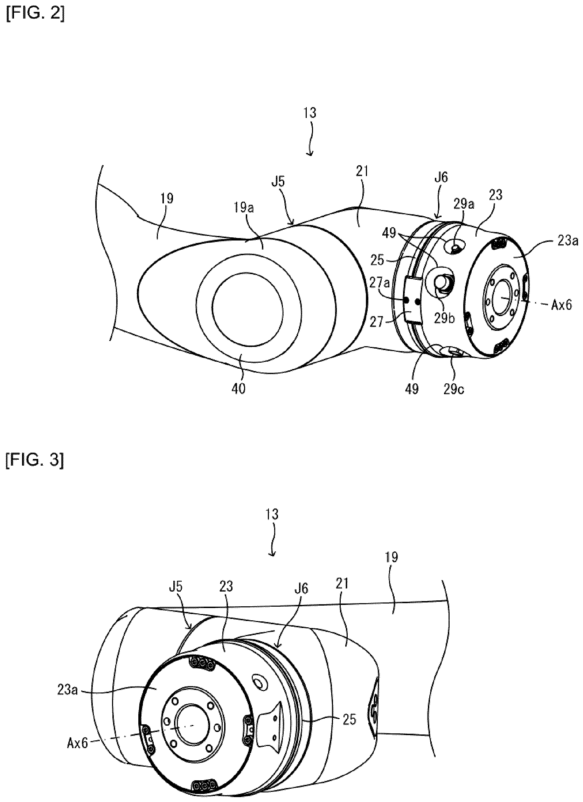

An example of the configuration of an operation unit provided in the arm 13 of the robot 3 will be described with reference to FIGS. 2 to 12. FIG. 2 is an enlarged perspective view illustrating the vicinity of a distal end portion of an arm, illustrating an example of the configuration of a strip-shaped switch. FIG.

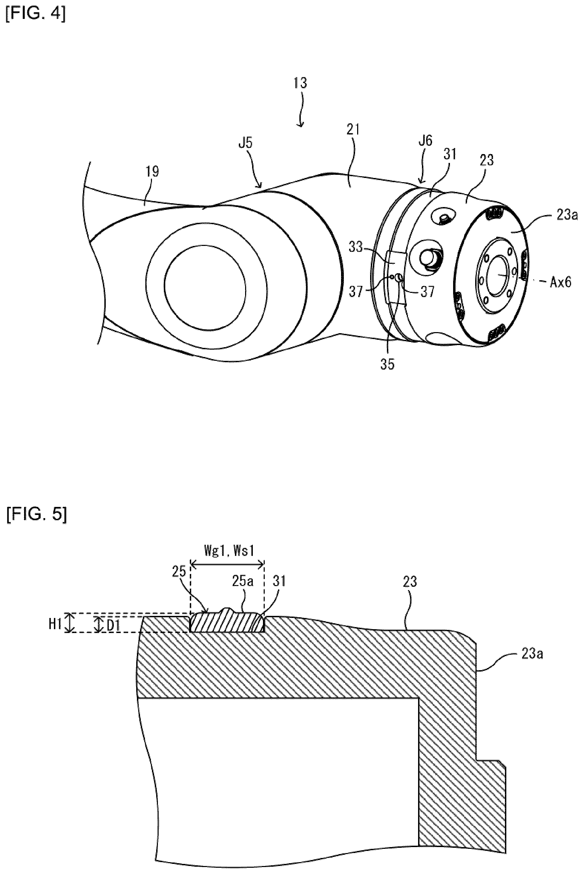

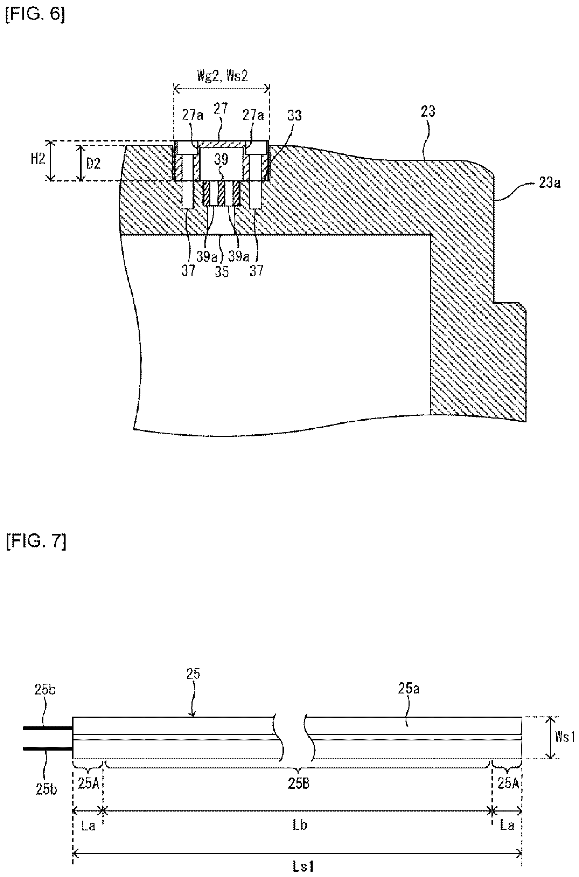

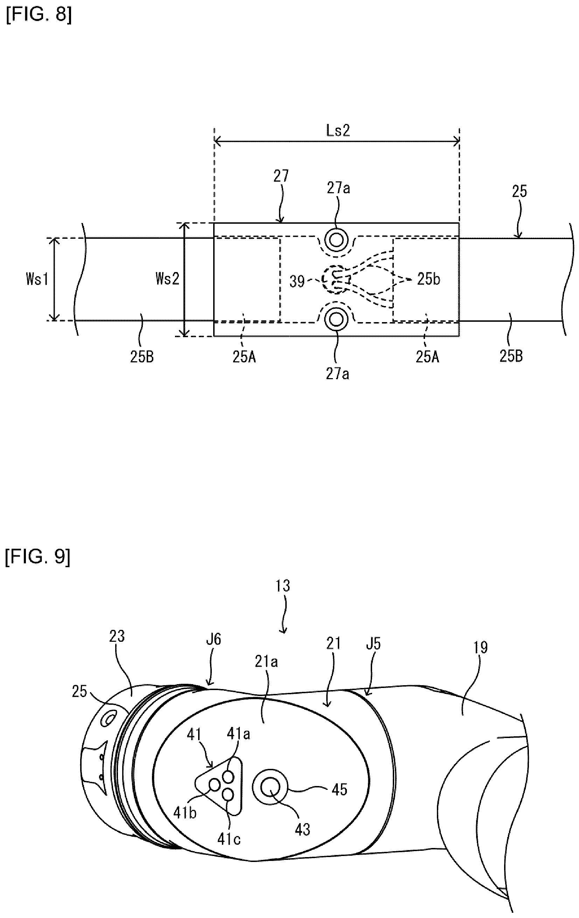

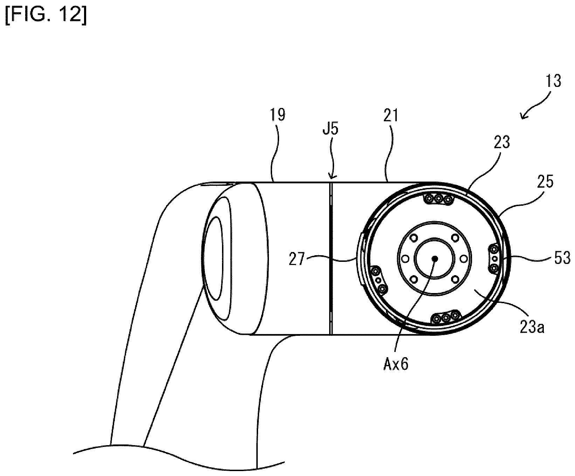

3 is an enlarged perspective view illustrating the vicinity of the distal end portion of the arm when viewed from another angle, illustrating the example of the configuration of the strip-shaped switch. FIG. 4 is an enlarged perspective view illustrating the vicinity of the distal end portion of the arm, illustrating an example of a state in which the strip-shaped switch has been removed. FIG. 5 is a cross-sectional view illustrating an example of the cross-sectional structure of a groove portion for accommodating the strip-shaped switch. FIG. 6 is a cross-sectional view illustrating an example of the cross-sectional structure of a recess for accommodating a fixing member for the strip-shaped switch. FIG. 7 is a plan view illustrating an example of the overall configuration of the strip-shaped switch. FIG. 8 is a plan view illustrating an example of the configuration of the fixing member for the strip-shaped switch. FIG. 9 is an enlarged perspective view illustrating the vicinity of the distal end portion of the arm, illustrating an example of the configuration of a function button. FIG. 10 is an enlarged perspective view illustrating the vicinity of the distal end portion of the arm, illustrating an example of a connector provided on the arm and a cable connected to an end effector. FIG. 11 illustrates an example of a case where a camera is attached to an attachment portion provided in the vicinity of the distal end portion of the arm. FIG. 12 illustrates an example of the configuration of the distal end portion of the arm when viewed from a rotation axis direction of a flange portion.

As illustrated in FIGS. 2 and 3, the arm 13 of the robot 3 is provided with a strip-shaped switch 25. The strip-shaped switch 25 (an example of a first operation unit) is an operation unit provided in a strip shape in a direction of circling around the outer periphery of the arm 13. The term "strip shape" refers to an elongated shape having a predetermined width in the short-side direction and a length longer than the predetermined width in the longitudinal direction. The "direction of circling around the outer periphery of the arm 13" is a direction (circular shape) of circling around the outer periphery of the arm 13 on a plane perpendicular to the extending direction of the arm 13, for example. The "direction of circling around the outer periphery of the arm 13" includes a direction (elliptical shape) of circling around the outer periphery of the arm 13 on a plane inclined with respect to a plane perpendicular to the extending direction of the arm 13, a spiral circling direction in which a start point and an end point of circling are shifted in the extending direction, and the like, for example.

The strip-shaped switch 25 can be operated at a plurality of locations in a direction of circling around the outer periphery of the arm 13, and when an operator performs an operation of the strip-shaped switch 25, the controller 5 causes the robot 3 to be in a movable state based on the operation. The "movable state" is a state in which, when an operator applies an external force by pushing the arm 13 by hand, the distal end portion 23a of the arm 13 can be freely moved within a predetermined range in accordance with the direction of the external force. This state is also referred to as hand guide because an operator can freely operate the robot 3. The robot 3 is in the movable state only while the strip-shaped switch 25 is operated by an operator. Note that the "movable state" also includes a state in which the arm 13 moves the distal end portion 23a by executing a preset operation. The strip-shaped switch 25 allows the controller 5 to realize the same function by being operated at the plurality of locations. The "same function" is a function of causing the robot 3 to be in the movable state, for example, but a function other than this may be realized.

The strip-shaped switch 25 may be provided on any of the lower arm portion 15, the elbow portion 17, the upper arm portion 19, the wrist portion 21, and the flange portion 23 of the arm 13. The strip-shaped switch 25 may be provided not only at one location but also at a plurality of locations. As an example, the strip-shaped switch 25 may be provided on the outer periphery of the upper arm portion 19 that rotates around the rotation axis Ax4 along the longitudinal direction of the arm 13 by the joint portion J4, or on the outer periphery of the flange portion 23 that rotates around the rotation axis Ax6 along the longitudinal direction of the arm 13 by the joint portion J6.

In the embodiment, as illustrated in FIGS. 2 and 3, the strip-shaped switch 25 is provided on the outer periphery of the flange portion 23 that rotates around the rotation axis Ax6 by the joint portion J6. The strip-shaped switch 25 is provided along a direction of circling around the outer periphery of the flange portion 23, for example, a circumferential direction around the rotation axis Ax6. The strip-shaped switch 25 is provided over one half or more of the outer circumference of the flange portion 23 in the circling direction on the outer periphery of the flange portion 23. The strip-shaped switch 25 is not limited to the above-described aspect, and three strip-shaped switches each having a length corresponding to one-third of the outer periphery of the flange portion 23 may be arranged along a direction of circling around the outer periphery of the flange portion 23, for example. The strip-shaped switch 25 may be provided over the entire outer periphery of the flange portion 23. In the embodiment, the strip-shaped switch 25 is provided over a length equal to or more than one half of the outer circumference of the flange portion 23 and less than the entire outer circumference of the flange portion 23, to be specific, over a length obtained by subtracting a length Ls2 (see FIG. 8) of the fixing member 27 in the longitudinal direction from the length of the entire outer circumference of the flange portion 23.

As illustrated in FIG. 2, the strip-shaped switch 25 is provided between the joint portion J6 and the distal end portion 23a in the direction of the rotation axis Ax6. To be specific, a plurality of (for example, three) connectors 29a, 29b, and 29c are provided in the vicinity of the distal end portion 23a of the flange portion 23, and the strip-shaped switch 25 is provided between the joint portion J6 and the connectors 29a, 29b, and 29c in the direction of the rotation axis Ax6. A cable to be used for the end effector 7 is connected to at least one of the connectors 29a, 29b, and 29c.

As illustrated in FIGS. 4 and 5, a groove portion 31 for accommodating the strip-shaped switch 25 is provided in the outer periphery of the flange portion 23. The groove portion 31 is provided along a direction of circling around the outer periphery of the flange portion 23. A width Wg1 of the groove portion 31 in the direction of the rotation axis Ax6 is substantially equal to a width Ws1 of the strip-shaped switch 25 in the direction of the rotation axis Ax6 or slightly larger than the width Ws1, and the strip-shaped switch 25 is accommodated in the groove portion 31 so as to be fitted therein. The strip-shaped switch 25 may be fixed to the groove portion 31 by an adhesive tape or an adhesive, for example. As illustrated in FIG. 5, a depth D1 of the groove portion 31 is slightly smaller than a height H1 of the strip-shaped switch 25. Thus, an operation surface 25a of the strip-shaped switch 25 is slightly protruded from the outer periphery of the flange portion 23 while preventing the strip-shaped switch 25 from largely protruding from the outer periphery of the flange portion 23, improving operability. The depth D1 of the groove portion 31 may be the same as the height H1.

As illustrated in FIGS. 4 and 6, a recess 33 for accommodating the fixing member 27 is provided in a part of the groove portion 31 in the longitudinal direction. The recess 33 is formed in substantially the same shape (for example, a rectangular shape) as the fixing member 27. A width Wg2 of the recess 33 in the direction of the rotation axis Ax6 is substantially equal to a width Ws2 of the fixing member 27 or slightly larger than the width Ws2, and the fixing member 27 is accommodated in the recess 33 so as to be fitted therein. As illustrated in FIG. 6, a depth D2 of the recess 33 is slightly smaller than a height H2 of the fixing member 27. The width Wg2 of the recess 33 is greater than the width Wg1 of the groove portion 31, and the depth D2 of the recess 33 is greater than the depth D1 of the groove portion 31.

As illustrated in FIGS. 4 and 6, the recess 33 is provided with an opening 35 and a plurality of (for example, two) screw holes 37. As illustrated in FIG. 6, the opening 35 penetrates through the housing of the flange portion 23, and a bush 39 (not illustrated in FIG. 4) is provided inside the opening 35. The bush 39 is made of a rubber material or a resin material, for example, and has two openings 39a. Two signal wires 25b (see FIG. 7) of the strip-shaped switch 25 are inserted through the openings 39a of the bush 39, and are led from the outer periphery of the flange portion 23 to the inside via the opening 35 of the flange portion 23.

As illustrated in FIG. 7, the strip-shaped switch 25 is an elongated switch having a width Ws1 in the short-side direction and a length Ls1 in the longitudinal direction that is longer than the width Ws1. The strip-shaped switch 25 has two signal wires 25b drawn out from one end in the longitudinal direction. The strip-shaped switch 25 has dead zones 25A each having a length La in the vicinity of both ends in the longitudinal direction, and has a sensitive zone 25B having a length Lb therebetween. The strip-shaped switch 25 is configured such that when an operator presses any location in the longitudinal direction of the sensitive zone 25B of the operation surface 25a, the contacts are closed inside the strip-shaped switch 25 and the two signal wires 25b are electrically connected to each other. The strip-shaped switch 25 may have a configuration other than the above-described configuration as long as operations at a plurality of locations in the longitudinal direction can be detected.

As illustrated in FIGS. 6 and 8, the fixing member 27 covers a part of the strip-shaped switch 25 in the longitudinal direction, and fixes the strip-shaped switch 25 to the outer periphery of the arm 13. In the embodiment, the fixing member 27 covers the dead zones 25A at both ends of the strip-shaped switch 25, and fixes the strip-shaped switch 25 to the outer periphery of the flange portion 23. To be specific, the fixing member 27 covers the dead zone 25A at one end of the strip-shaped switch 25 on one side in the longitudinal direction, covers the dead zone 25A at the other end of the strip-shaped switch 25 on the other side in the longitudinal direction, and covers the two signal wires 25b drawn out from the one end of the strip-shaped switch 25 and the bush 39 at the central portion in the longitudinal direction. The fixing member 27 has a through hole 27a through which a screw (not illustrated) is inserted on both sides in the short-side direction at the central portion in the longitudinal direction. The fixing member 27 is fixed to the recess 33 by fastening a screw inserted through the through hole 27a to a screw hole 37 provided in the housing of the flange portion 23 in a state where the fixing member 27 covers the dead zones 25A at both ends of the strip-shaped switch 25, the signal wires 25b, and the bush 39. The fixing member 27 allows only the sensitive zone 25B of the strip-shaped switch 25 to be exposed to the outer periphery of the flange portion 23, and causes both ends of the strip-shaped switch 25 to be pressed to prevent floating.

As illustrated in FIG. 8, the fixing member 27 has a substantially rectangular shape, and has a length Ls2 in the longitudinal direction and a width Ws2 in the short-side direction. The width Ws2 of the fixing member 27 is larger than the width Ws1 of the strip-shaped switch 25. Since the fixing member 27 has a shape different from that of the strip-shaped switch 25, the fixing member 27 can be visually recognized by an operator, and the operator can easily distinguish the part of the dead zones 25A covered with the fixing member 27 from the part of the sensitive zone 25B exposed from the fixing member 27. The length Ls2 of the fixing member 27 is longer than twice the length La of the dead zones 25A of the strip-shaped switch 25. The total length of the length Ls2 of the fixing member 27 and the length Lb of the sensitive zone 25B of the strip-shaped switch 25 is substantially equal to the length of the outer periphery of the flange portion 23. The length Ls1 of the strip-shaped switch 25 is shorter than the length of the outer periphery of the flange portion 23.

By providing the strip-shaped switch 25 configured as described above on the outer periphery of the flange portion 23, the following can be executed. For example, at the time of teaching work for storing an operation of the robot 3, an operator holds the strip-shaped switch 25 to turn on the switch, and presses and moves the flange portion 23 by hand in a state where the strip-shaped switch 25 is gripped, so that the operation can be stored. Such teaching work is also referred to as direct teaching because an operator teaches the operation of the robot 3 by hand. In addition, for example, when an external force due to a collision with a person or an object acts on the robot 3 and an emergency stop is executed, an operator grips the strip-shaped switch 25 to turn on the switch, and pushes and moves the flange portion 23 by hand in a state where the strip-shaped switch 25 is held, so that the arm 13 can be quickly retracted from the collision object.

In order to allow an operator to visually recognize a state in which the strip-shaped switch 25 is operated and a state in which the strip-shaped switch 25 is not operated, these states may be displayed in an identifiable manner. For example, in the embodiment, as illustrated in FIG. 2, the upper arm portion 19 has a bent portion 19a bent in an L-shape on the distal end side, and a ring-shaped light emitting unit 40 is provided on a convex outer surface of the bent portion 19a, for example. The light emitting unit 40 includes a light emitting diode (LED) or the like, for example. The light emitting unit 40 emits light in different colors, depending on whether the strip-shaped switch 25 is operated or not. The mode of light emission may be other than that described above, and light may be emitted only when the strip-shaped switch 25 is operated, for example. Further, the shape of the light emitting unit 40 may be other than the ring shape.

As illustrated in FIG. 9, a function button 41 is provided on the wrist portion 21 adjacent to the flange portion 23 on which the strip-shaped switch 25 is provided in the arm 13. The wrist portion 21 has a bent portion 21a bent in an L-shape, and the function button 41 is provided on a convex outer surface of the bent portion 21a, for example. The number of the function button 41 may be one or more. In the embodiment, the function button 41 includes three function buttons 41a, 41b, and 41c, for example.

A function designated by an operator can be assigned to each of the function buttons 41a, 41b, and 41c (an example of a second operation unit). Since three function buttons 41a, 41b, and 41c are provided in the embodiment, three functions can be assigned at the maximum. For example, a function of operating the end effector 7 may be assigned to at least one of the function buttons 41a, 41b, and 41c. When the end effector 7 is a robot hand, for example, the function of operating the end effector 7 is a function of opening and closing the robot hand. In this case, an operator can execute the following operation by using the strip-shaped switch 25 and the function buttons 41a, 41b, and 41c in combination. For example, an operator can drive the end effector 7 using the function buttons 41a, 41b, and 41c after moving the end effector 7 to a desired position by hand guide using the strip-shaped switch 25, making it easy to check the operation of the end effector 7.

In addition, for example, at least one of the function buttons 41a, 41b, and 41c may be assigned a function of registering a teaching point when teaching work is executed. In this case, an operator can execute the following operation by using the strip-shaped switch 25 and the function buttons 41a, 41b, and 41c in combination. For example, when an operator operates at least one of the function buttons 41a, 41b, and 41c while executing hand guide using the strip-shaped switch 25 in the teaching work, the position of the distal end portion 23a of the arm 13 (or the position of the distal end portion of the end effector 7) at the time of the operation can be registered as a teaching point, facilitating the teaching work.

Since the strip-shaped switch 25 and the function buttons 41a, 41b, and 41c are disposed on the flange portion 23 and the wrist portion 21 adjacent to each other, the strip-shaped switch 25 and the function buttons 41a, 41b, and 41c are positioned in the vicinity of each other, facilitating the above-described combined operation. Note that functions other than those described above may be assigned to the function button 41.

As illustrated in FIG. 9, a cancel button 43 is provided on the wrist portion 21 adjacent to the flange portion 23 on which the strip-shaped switch 25 is provided in the arm 13. The cancel button 43 (an example of a third operation unit) is provided on a convex outer surface of the bent portion 21a of the wrist portion 21, for example. In the embodiment, the cancel button 43 is provided adjacent to the function button 41.

As described above, when the robot 3 receives an external force due to a collision with a person or an object, for example, a protective stop or an emergency stop for immediately stopping the operation is executed. The cancel button 43 is a button for canceling the emergency stop. An operator can cancel the emergency stop by operating the cancel button 43 after the emergency stop is executed. An operator can execute the following operation by using the strip-shaped switch 25 and the cancel button 43 in combination. For example, when an emergency stop is executed, an operator can operate the strip-shaped switch 25 to hand-guide the robot 3 and quickly retract the arm 13 from the collision object, and operate the cancel button 43 after safety is secured to cancel the emergency stop and restart the operation of the robot 3. Since the strip-shaped switch 25 and the cancel button 43 are disposed on the flange portion 23 and the wrist portion 21 adjacent to each other, the strip-shaped switch 25 and the cancel button 43 are positioned in the vicinity of each other, facilitating the above-described combined operation.

In order to allow an operator to visually recognize the emergency stop state and the state in which the emergency stop is canceled by the cancel button 43, these states may be displayed in an identifiable manner. For example, in the embodiment, as illustrated in FIG. 9, a ring-shaped light emitting unit 45 is provided around the cancel button 43. The light emitting unit 45 includes a light emitting diode (LED) or the like, for example. The light emitting unit 45 is turned on in a predetermined color when the emergency stop is executed, and is turned off when the emergency stop is canceled by the cancel button 43. The mode of light emission may be other than that described above, and light emission colors may be made different in both states, for example. Further, the shape of the light emitting unit 45 may be other than the ring shape.

As illustrated in FIG. 10, an end effector 7 is provided on the distal end portion 23a of the arm 13. As illustrated in FIG. 2, a connector 29 to which a cable is connected is provided on the flange portion 23 between the strip-shaped switch 25 and the distal end portion 23a. The number of the connector 29 may be one or more. In the embodiment, three connectors 29a, 29b, and 29c are provided, for example. A cable 47 to be used for the end effector 7 is connected to at least one of the connectors 29a, 29b, and 29c. In the example illustrated in FIG. 10, one end of the cable 47 is connected to the connector 29a, for example, and the other end of the cable 47 is connected to the end effector 7. The cable 47 is a power cable, a signal wire, an air tube, or the like, for example.

As illustrated in FIGS. 2 and 10, each of the connectors 29a, 29b, and 29c is accommodated in a recess 49 formed in the outer peripheral surface of the flange portion 23 so as to be recessed toward the inner peripheral side. This makes it possible to prevent the connectors 29a, 29b, and 29c from protruding from the outer periphery of the flange portion 23, and makes it possible to suppress cables from becoming obstacles when the cables are connected to the connectors 29a, 29b, and 29c. Any one of the connectors 29a, 29b, and 29c, for example, the connector 29b is disposed in the vicinity of the fixing member 27 for fixing the strip-shaped switch 25. Thus, it is possible to suppress a cable connected to the connector 29b from becoming an obstacle when an operator operates the sensitive zone 25B of the strip-shaped switch 25.

As illustrated in FIG. 11, the robot 3 includes an attachment portion 53 to which a camera 51 for capturing an image of a work target for the robot 3 is attached at a position proximate to the distal end portion 23a of the arm 13 with respect to the strip-shaped switch 25. The attachment portion 53 is formed as a flat portion for attaching a support member 55 of the camera 51, for example. The support member 55 is fixed to the attachment portion 53 by inserting two screws (not illustrated) through through holes 55a of the support member 55 and fastening the screws to screw holes 53a of the attachment portion 53, for example.

As illustrated in FIG. 12, the fixing member 27 of the strip-shaped switch 25 and the attachment portion 53 of the camera 51 are disposed on the flange portion 23 at positions separated by approximately 180 degrees in the circumferential direction around the rotation axis Ax6. The angle between the fixing member 27 and the attachment portion 53 does not necessarily need to be 180 degrees, and may be an angle greater than 90 degrees and equal to or less than 180 degrees, for example.

The configuration of the operation unit of the arm 13 described above is an example, and is not limited to the contents described above. For example, the strip-shaped switch 25 may not necessarily have a strip shape as long as the strip-shaped switch 25 can be operated at a plurality of locations in a direction of circling around the outer periphery of the arm 13 and can cause the controller 5 to realize the same function by the operations at the plurality of locations. For example, point-like switches that are not elongated, such as square or circular switches, may be arranged in a direction of circling around the outer periphery of the arm 13 without any gap or at predetermined intervals. At least one of the function button 41 and the cancel button 43 may be provided on the flange portion 23 on which the strip-shaped switch 25 is provided.

### 4. Functional Configuration of Controller

An example of the functional configuration of the controller 5 will be described with reference to FIG. 13. FIG. 13 is a block diagram illustrating an example of the functional configuration of the controller 5.

As illustrated in FIG. 13, the robot system 1 includes the controller 5 and the robot 3. The controller 5 includes a motion controller 57 and a multi-axis servo controller 59. The motion controller 57 and the multi-axis servo controller 59 may be configured as separate control devices instead of being integrated with each other.

The multi-axis servo controller 59 includes a servo control unit 61 and a servo amplifier 63. The servo control unit 61 performs servo control of each servo motor of the actuators Ac1 to Ac6 based on a command (for example, a position command to each servo motor) input from the motion controller 57 and a detection value of each encoder of the actuators Ac1 to Ac6, and calculates a torque or a current value of each servo motor. The servo amplifier 63 controls the driving power supplied to each servo motor based on the torque and the current value of each servo motor input from the servo control unit 61, and controls the operation of the robot 3. The servo amplifier 63 may be installed integrally with the actuators Ac1 to Ac6 of the robot 3 (so-called amplifier built-in actuators).

The motion controller 57 includes a first control unit 65, a second control unit 67, a third control unit 69, a fourth control unit 71, and a fifth control unit 73.

The first control unit 65 determines the presence or absence of an external force applied to the robot 3 based on a physical quantity detected by the torque sensors Ts1 to Ts6 (examples of a sensor). The "physical quantity" is torque, for example, but a physical quantity other than torque may be detected as long as an external force can be determined. The "external force" is a force applied by pushing the arm 13 by hand when an operator executes the above-described hand guide. The "external force" also includes a force received from a person or an object when the robot 3 collides with the person or the object, for example.

When the first control unit 65 determines that there is an external force after the strip-shaped switch 25 is operated, the second control unit 67 operates the robot 3 based on the external force. For example, when the first control unit 65 determines that there is an external force after the strip-shaped switch 25 is operated at a time when the teaching work for storing the operation of the robot 3 is executed and/or when the emergency stop is executed, the second control unit 67 operates the robot 3 based on the external force. To be specific, the second control unit 67 controls the robot 3 such that the distal end portion 23a of the arm 13 moves in a direction corresponding to an external force other than gravity in response to the external force, while performing gravity compensation on the actuators Ac1 to Ac6 of the robot 3 so that the posture of the arm 13 does not collapse due to its own weight, for example. The second control unit 67 causes the robot 3 to operate based on the external force for a time during which the strip-shaped switch 25 is operated. When the strip-shaped switch 25 is not operated, the second control unit 67 activates the brakes of the actuators Ac1 to Ac6 disposed in the respective joint portions to stop the robot 3. The means for stopping the robot 3 is not limited to activating the brakes as described above. For example, the robot 3 may be stopped by so-called servo lock.

The third control unit 69 assigns a function designated by an operator to the function buttons 41a, 41b, and 41c. For example, the third control unit 69 may assign a function of operating the end effector 7 to at least one of the function buttons 41a, 41b, and 41c. In addition, for example, the third control unit may assign, to at least one of the function buttons 41a, 41b, and 41c, a function of registering, as a teaching point, the position of the distal end portion 23a of the arm 13 at the time when the at least one of the function buttons 41a, 41b, and 41c is operated during the execution of the teaching work for storing the operation of the robot 3.

The path (locus) connecting the teaching points registered by the function switch 41 may be subjected to interpolation such as linear interpolation, arc interpolation, or joint interpolation by the third control unit 69. In addition, when the camera 51 or the like mounted on the robot 3 detects that there is an obstacle between the teaching points, the third control unit 69 may automatically calculate a locus that avoids the obstacle (path planning) and control the robot 3 in accordance with the locus calculated in this manner.

The fourth control unit 71 executes an emergency stop when it is detected that an external force due to a collision with a person or an object acts on the robot 3 in a state where the strip-shaped switch 25 is not operated. The emergency stop includes, besides immediately stopping the operation of the robot 3 when the collision is detected, stopping the operation after executing a predetermined retracting operation, reducing the operation speed, and the like.

The fifth control unit 73 (an example of a fourth control unit) cancels the emergency stop when the cancel button 43 is operated by an operator after the emergency stop is executed by the fourth control unit 71.

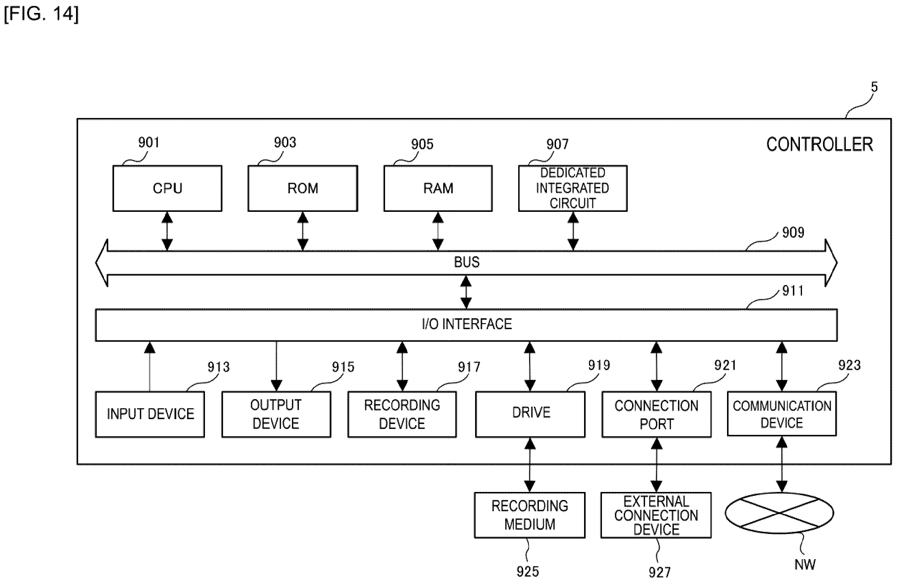

Note that the processes and the like in the first control unit 65, the second control unit 67, the third control unit 69, the fourth control unit 71, the fifth control unit 73, and the like of the motion controller 57 described above are not limited to the example of distribution of these processes, and the processes may be performed by a smaller number of processing units (for example, one processing unit), or may be performed by further subdivided processing units, for example. Note that the functions of the motion controller 57 described above may be implemented by a program executed by a CPU 901 (see FIG. 14) described below, or one or more or all of the functions may be implemented by actual devices such as ASICs, FPGAs, or other electrical circuits.

### 5. Effects of the Embodiment

As described above, in the robot system 1 according to the embodiment, the strip-shaped switch 25 that allows the controller 5 to cause the robot 3 to be in a movable state based on an operation when an operator performs the operation is provided so as to be operable at a plurality of locations in a direction of circling around the outer periphery of the arm 13 of the robot 3. Thus, an operator can operate the strip-shaped switch 25 from multiple directions, allowing the operator to easily operate the strip-shaped switch 25 even if the posture or the orientation of the robot 3 changes. Thus, the operability of the robot 3 can be improved.

In the present embodiment, the strip-shaped switch 25 may cause the controller 5 to realize the same function in accordance with an operation at a plurality of locations. In this case, a common function can be exhibited no matter what location in the circling direction an operator operates the strip-shaped switch 25 at. Thus, the operability of the robot 3 can be improved.

In the present embodiment, the strip-shaped switch 25 may be an operation unit provided in a strip shape in a direction of circling around the outer periphery of the arm 13. In this case, an operator can operate the strip-shaped switch 25 from multiple directions. Thus, the operability of the robot 3 can be improved. Since the strip-shaped switch 25 has a strip shape, an operator can directly operate the robot 3 to retract or the like only by applying a force in a desired direction to move the arm 13 of the robot 3 while gripping the strip-shaped switch 25. Further, the number of components and the cost can be reduced as compared with a case where point-like operation units are continuously arranged in the circling direction, for example.

In addition, in the present embodiment, the robot 3 may include torque sensors Ts1 to Ts6. In that case, the controller 5 may include a first control unit 65 that determines the presence or absence of an external force applied to the robot 3 based on physical quantities detected by the torque sensors Ts1 to Ts6, and a second control unit 67 that moves the robot 3 based on an external force when the first control unit 65 determines that the external force is present after the strip-shaped switch 25 is operated.

In general, the robot cannot be operated by an operator applying an external force, because a brake of a motor disposed in a joint portion is activated while the operation is stopped. Therefore, an operator may operate the robot by operating a terminal device (a pendant or the like), for example. According to the present embodiment, when it is determined that there is an external force applied to the robot 3 after the strip-shaped switch 25 is operated, the robot 3 is operated so as to follow the external force. Thus, an operator can operate the robot 3 by pushing the robot 3 by hand after operating the strip-shaped switch 25. Thus, it is possible to easily operate the robot 3 without using a terminal device or the like.

In addition, in the present embodiment, the strip-shaped switch 25 may be provided on the outer periphery of the flange portion 23 rotated around the rotation axis Ax6 along the longitudinal direction of the arm 13 by the joint portion J6, of the arm 13.

For example, when the flange portion 23 is provided with a point-like operation unit that is not strip-shaped, there is a possibility that the operation unit moves to a position (for example, a side opposite to an operator) that is difficult to be seen from an operator along with the rotation of the flange portion 23 around the rotation axis Ax6, reducing operability. According to the present embodiment, the strip-shaped switch 25 that is operable at a plurality of locations in the circling direction of the outer periphery of the flange portion 23 is provided, and thus an operator can easily operate the strip-shaped switch 25 even when the flange portion 23 is rotated. Thus, the operability of the robot 3 can be improved.

Further, since the strip-shaped switch 25 for hand guide is provided on the rotatable flange portion 23, the end effector 7 can be rotated when an operator applies a force in the rotation direction while pressing the strip-shaped switch 25. In such a configuration, since the strip-shaped switch 25 is formed in a strip shape, the strip-shaped switch 25 is basically positioned on the operator side even when the flange portion 23 is rotated, and thus a synergistic effect that the operation is easy can be expected.

Further, in the present embodiment, the strip-shaped switch 25 may be provided over one half or more of the outer circumference of the flange portion 23 in the circling direction on the outer periphery of the flange portion 23. In this case, at least a part of the strip-shaped switch 25 can be positioned in a range in which an operator can view the strip-shaped switch 25, no matter what direction the operator is positioned in with respect to the flange portion 23. Thus, the operator can easily operate the strip-shaped switch 25.

In addition, in the present embodiment, the robot 3 may have a groove portion 31 that accommodates the strip-shaped switch 25 in the outer periphery of the flange portion 23. In this case, it is possible to prevent the strip-shaped switch 25 from being caught due to the strip-shaped switch 25 protruding from the outer periphery of the flange portion 23. Further, since the strip-shaped switch 25 is fitted into the groove portion 31, it is possible to prevent the displacement of the strip-shaped switch 25 in the direction of the rotation axis Ax6.

In the present embodiment, the robot 3 may include at least one function button 41 provided on the wrist portion 21 adjacent to the flange portion 23 on which the strip-shaped switch 25 is provided. In that case, the controller 5 may include a third control unit 69 that assigns a function designated by an operator to the at least one function button 41.

In this case, convenience can be improved since a function desired by an operator can be assigned to the function button 41. Further, since the function button 41 is provided on the wrist portion 21 adjacent to the flange portion 23 on which the strip-shaped switch 25 is provided, an operator can easily operate the strip-shaped switch 25 and the function button 41 at the same time. Thus, the function by the strip-shaped switch 25 and the function assigned to the function button 41 can be simultaneously exhibited while improving operability.

Further, in the present embodiment, the third control unit 69 may assign a function of operating the end effector 7 to the function button 41. In this case, an operator can operate the end effector 7 while exhibiting the function (for example, hand guide) by the strip-shaped switch 25. Thus, it is possible to improve workability such as operation confirmation of the end effector 7.

In addition, in the present embodiment, the third control unit 69 may assign, to the function button 41, a function of registering, as a teaching point, the position of the distal end portion 23a of the arm 13 at the time when the function button 41 is operated during the execution of the teaching work. In this case, an operator can register the position of the distal end portion 23a of the arm 13 at that time as a teaching point by operating the function button 41 while exhibiting the function by the strip-shaped switch 25 (for example, direct teaching by hand guide) during the execution of the teaching work. Thus, it is possible to improve the workability of the teaching work.

In the present embodiment, the robot 3 may include a cancel button 43 provided on the wrist portion 21 adjacent to the flange portion 23 on which the strip-shaped switch 25 is provided. In that case, the controller 5 may include a fifth control unit 73 that cancels an emergency stop when the cancel button 43 is operated after the emergency stop is executed when an external force due to a collision acts on the robot 3.

In this case, when an external force due to a collision acts on the robot 3 and an emergency stop is executed, an operator can easily cancel the emergency stop by operating the cancel button 43. Further, since the cancel button 43 is provided on the wrist portion 21 adjacent to the flange portion 23 on which the strip-shaped switch 25 is provided, an operator can easily operate the strip-shaped switch 25 and the cancel button 43 at the same time. This makes it possible to improve operability, and cause the robot 3 to resume operation by canceling the emergency stop using the cancel button 43 while exerting the function by the strip-shaped switch 25 (for example, retraction from the emergency stop position by hand guide).

In the present embodiment, the second control unit 67 may cause the robot 3 to operate based on an external force when the first control unit 65 determines that the external force is present after the strip-shaped switch 25 is operated at a time when the teaching work for storing the operation of the robot 3 is executed and/or when the emergency stop is executed.

In this case, an operator can operate the robot 3 by pushing the robot 3 by hand and store the operation by operating the strip-shaped switch 25 during the teaching work. In addition, by operating the strip-shaped switch 25 when an external force due to a collision acts on the robot 3 and an emergency stop is executed, the robot 3 can be pushed by hand and quickly retracted from the collision object. Thus, it is possible to improve the operability of the robot 3 during the execution of the teaching work, at the time of the emergency stop, or the like. In addition, convenience can be improved when the strip-shaped switch 25 is also used as an operation unit for hand guide both during the execution of the teaching work and at the time of the emergency stop.

In addition, in the present embodiment, the second control unit 67 may cause the robot 3 to operate based on the external force for a time during which the strip-shaped switch 25 is operated. In this case, an operator can operate the robot 3 by hand only while operating the strip-shaped switch 25, and therefore it is possible to prevent an unexpected situation in which the distal end portion 23a of the robot 3 moves to an unintended position without being noticed by the operator.

In addition, in the present embodiment, the robot 3 may include an attachment portion 53 to which a camera 51 that captures an image of a work target for the robot 3 is attached at a position proximate to the distal end portion 23a of the arm 13 with respect to the strip-shaped switch 25. In this case, it is possible to prevent a hand of an operator from entering the field of view of the camera 51 when the operator operates the strip-shaped switch 25.

In addition, in the present embodiment, the robot 3 may include a fixing member 27 that covers a part of the strip-shaped switch 25 in the longitudinal direction and fixes the strip-shaped switch 25 to the outer periphery of the arm 13. In this case, the strip-shaped switch 25 can be firmly fixed to the outer periphery of the arm 13 by the fixing member 27. When the strip-shaped switch 25 has the dead zone 25A in a part in the longitudinal direction, an operator can be prevented from operating the dead zone 25A by covering the dead zone 25A with the fixing member 27.

In addition, in the present embodiment, the strip-shaped switch 25 may include a signal wire 25b led from the outer periphery of the arm 13 to the inside thereof via the opening 35 provided in the arm 13. In that case, the fixing member 27 may be provided so as to cover the signal wire 25b. In this case, the signal wire 25b of the strip-shaped switch 25 can be protected by the fixing member 27. In addition, the opening 35 through which the signal wire 25b passes and the bush 39 can be covered by the fixing member 27, and thus the waterproof and dustproof effects of the robot 3 can be enhanced.

In the present embodiment, the robot 3 may include the connector 29 to which the cable 47 is connected between the strip-shaped switch 25 and the distal end portion 23a of the arm 13. In that case, one end of the cable 47 may be connected to the connector 29, and the other end may be connected to the end effector 7. In this case, it is possible to prevent the cable 47 from being led across the strip-shaped switch 25, and thus it is possible to prevent the operability of the strip-shaped switch 25 from being deteriorated by the cable 47.

In addition, in the present embodiment, the robot 3 may include the attachment portion 53 to which the camera 51 that captures an image of the work target for the robot 3 is attached. In that case, the fixing member 27 and the attachment portion 53 may be disposed at positions separated by approximately 180 degrees in the circumferential direction around the rotation axis Ax6 of the flange portion 23. In this case, a portion other than the dead zone 25A of the strip-shaped switch 25, that is, a portion of the operable sensitive zone 25B can be disposed in the vicinity of the camera 51. Thus, it is possible to perform work using the camera 51 while pressing the strip-shaped switch 25, improving workability.

### 6. Example of Hardware Configuration of Controller

An example of the hardware configuration of the controller 5 will be described with reference to FIG. 14. In FIG. 14, the configuration of the controller 5 related to a function (multi-axis servo controller 59) of supplying electric power to the actuators Ac1 to Ac6 is illustrated with some omissions as appropriate.

As illustrated in FIG. 14, the controller 5 includes a CPU 901, a ROM 903, a RAM 905, a dedicated integrated circuit 907 built for a particular application such as an ASIC or an FPGA, an input device 913, an output device 915, a recording device 917, a drive 919, a connection port 921, and a communication device 923, for example. These components are connected in a manner allowing signals to be transmitted to one another via a bus 909 or an I/O interface 911.

The program can be recorded on, for example, the ROM 903, the RAM 905, or the recording device 917 such as a hard disk.

The program can be temporarily or non-temporarily (permanently) recorded on a removable recording medium 925, examples of which include magnetic disks such as flexible disks, optical disks such as various CDs, MO disks, and DVDs, and semiconductor memories. The recording medium 925 configured in such a manner can be provided as so-called package software. In this case, the program recorded on the recording medium 925 can be read out by the drive 919 and recorded on the recording device 917 via the I/O interface 911, the bus 909, and the like.

The program can be recorded on, for example, a download site, another computer, or another recording device (not illustrated). In this case, the program is transferred via a network NW, such as a LAN or the Internet, and the communication device 923 receives this program. The program received by the communication device 923 may be recorded on the recording device 917 via the I/O interface 911, the bus 909, and the like.

The program can be recorded, for example, on an appropriate external connection device 927. In this case, the program may be transferred via the connection port 921 as appropriate and recorded on the recording device 917 via the I/O interface 911, the bus 909, and the like.

The CPU 901 executes various processes in accordance with the program recorded on the recording device 917 to implement the processes executed by the first control unit 65, the second control unit 67, the third control unit 69, the fourth control unit 71, the fifth control unit 73, and the like described above. For example, the CPU 901 may directly read the program from the recording device 917 and execute the program, or may load the program into the RAM 905 once and execute the program. When the CPU 901 receives the program, for example, via the communication device 923, the drive 919, or the connection port 921, the CPU 901 may directly execute the received program without recording the received program on the recording device 917.

As necessary, the CPU 901 may execute various kinds of processing based on signals and information input from the input device 913, examples of which include a mouse, a keyboard, a microphone (not illustrated) and the like.

The CPU 901 may output the result of executing the various kinds of processing from the output device 915, such as a display device or an audio output device. The CPU 901 may transmit the processing result via the communication device 923 or the connection port 921 as necessary. The CPU 901 may record the processing result on the recording device 917 or the recording medium 925.

In a case where "perpendicular", "parallel", "flat/planar", and the like are used in the description above, the meanings are not construed strictly. The terms "perpendicular", "parallel", and "flat/planar" mean "substantially perpendicular", "substantially parallel", and "substantially flat/planar", respectively, with allowance for design and manufacturing tolerances and errors.

In a case where "the same", "identical", "equal", "different" and the like are used in the description above in reference to the external dimensions and size, the shape, the position, or the like, the meanings are not construed strictly. The terms "the same", "identical", "equal", and "different" mean "substantially the same", "substantially identical", "substantially equal", and "substantially different", respectively, with allowance for design and manufacturing tolerances and errors.

In addition to what has already been described above, the techniques according to the embodiment and the modified examples may be used in combination as appropriate. Also, while examples are not described, various modifications may be made to the above-described embodiments or modified examples within a range that does not depart from the technical scope thereof.

The problems to be solved by the above-described embodiment and modified examples and effects are not limited to the contents described above. The embodiment, the modified examples, or the like may solve a problem not described above or produce an effect not described above, or may solve only some of the described problems or produce only some of the described effects.

### REFERENCE SIGNS LIST

1 Robot system
3 Robot
5 Controller
7 End effector
13 Arm
15 Lower arm portion (example of link)
17 Elbow portion (example of link)
19 Upper arm portion (example of link)
21 Wrist portion (example of link)
23 Flange portion (example of link)
23a Distal end portion
25 Strip-shaped switch (example of first operation unit) 25b Signal wire
27 Fixing member
29 Connector
29a Connector
29b Connector
29c Connector
31 Groove portion
33 Recess
35 Opening
41 Function button (example of second operation unit)
41a Function button (example of second operation unit)
41b Function button (example of second operation unit)
41c Function button (example of second operation unit)
43 Cancel button (example of third operation unit)
47 Cable
51 Camera
53 Attachment portion
65 First control unit
67 Second control unit
69 Third control unit
71 Fourth control unit
73 Fifth control unit (example of fourth control unit) Ax6 Rotation axis
J1 Joint portion
J2 Joint portion
J3 Joint portion
J4 Joint portion
J5 Joint portion
J6 Joint portion
Ts1 Torque sensor (example of sensor)
Ts2 Torque sensor (example of sensor)
Ts3 Torque sensor (example of sensor)
Ts4 Torque sensor (example of sensor)
Ts5 Torque sensor (example of sensor)
Ts6 Torque sensor (example of sensor)

## Claims

1. A robot system (1) comprising:
a robot (3); and
a controller (5) configured to control the robot (3), wherein
the robot (3) includes
an arm (13), and
a first operation unit configured to allow an operation at a plurality of locations in a direction of circling around an outer periphery of the arm (13), and allow the controller (5) to cause the robot (3) to be in a movable state based on the operation when an operator performs the operation.

2. The robot system (1) according to claim 1, wherein
the first operation unit allows the operation at the plurality of locations to cause the controller (5) to implement an identical function for each of the plurality of locations.

3. The robot system (1) according to claim 2, wherein
the first operation unit is an operation unit provided in a strip shape in the direction of circling around the outer periphery of the arm (13).

4. The robot system (1) according to claim 1, wherein
the robot (3) includes a sensor, and
the controller (5) includes
a first control unit (65) that determines presence or absence of an external force applied to the robot (3) based on a physical quantity detected by the sensor, and
a second control unit (67) that causes the robot (3) to move based on the external force when the first control unit (65) determines that the external force is present after the first operation unit is operated.

5. The robot system (1) according to claim 1, wherein
the arm (13) includes
a plurality of links, and
at least one joint portion that rotatably couples adjacent links of the plurality of links, and
the first operation unit is provided on an outer periphery of a link of the plurality of links, the link being caused to rotate around a rotation axis (Ax6) along a longitudinal direction of the link by the joint portion.

6. The robot system (1) according to claim 5, wherein
the first operation unit is provided over one half or more of an outer circumference of the link in the circling direction on the outer periphery of the link.

7. The robot system (1) according to claim 5 or 6, wherein
the robot (3) includes a groove portion (31) that accommodates the first operation unit in the outer periphery of the link.

8. The robot system (1) according to claim 1, wherein
the arm (13) includes
a plurality of links, and
at least one joint portion that rotatably couples adjacent links of the plurality of links,
the robot (3) includes at least one second operation unit provided on a link of the plurality of links, the link being identical to or adjacent to a link of the plurality of links on which the first operation unit is provided, and
the controller (5) includes a third control unit (69) that assigns a function designated by the operator to the at least one second operation unit.

9. The robot system (1) according to claim 8, wherein
the robot (3) includes an end effector (7) at a distal end portion (23a) of the arm (13), and
the third control unit (69) assigns a function of operating the end effector (7) to the at least one second operation unit.

10. The robot system (1) according to claim 8 or 9, wherein
the third control unit (69) assigns, to the at least one second operation unit, a function of registering, as a teaching point, a position of a distal end portion (23a) of the arm (13) at a time when the second operation unit is operated during execution of teaching work for storing operation of the robot (3).

11. The robot system (1) according to claim 1, wherein
the arm (13) includes
a plurality of links, and
at least one joint portion that rotatably couples adjacent links of the plurality of links,
the robot (3) includes a third operation unit provided on a link of the plurality of links, the link being identical to or adjacent to a link of the plurality of links on which the first operation unit is provided, and
the controller (5) includes a fourth control unit (71) that cancels an emergency stop when the third operation unit is operated after the emergency stop is executed when an external force due to a collision acts on the robot (3).

12. The robot system (1) according to claim 11, wherein
the robot (3) includes a sensor, and
the controller (5) includes
a first control unit (65) that determines presence or absence of an external force applied to the robot (3) based on a physical quantity detected by the sensor, and
a second control unit (67) that causes the robot (3) to move based on the external force when the first control unit (65) determines that the external force is present after the first operation unit is operated at a time when teaching work for storing operation of the robot (3) is executed and/or when the emergency stop is executed.

13. The robot system (1) according to claim 1, wherein
the robot (3) includes an attachment portion (53) to which a camera (51) for capturing an image of a work target for the robot (3) is attached at a position proximate to a distal end portion (23a) of the arm (13) with respect to the first operation unit.

14. The robot system (1) according to claim 1, wherein
the robot (3) includes
an end effector (7) provided at a distal end portion (23a) of the arm (13), and
a connector (29) to which a cable (47) is connected between the first operation unit and the distal end portion (23a) of the arm (13), and
the cable (47) has one end connected to the connector (29), and the other end connected to the end effector (7).

15. A method of controlling a robot (3), comprising:
when an operator performs an operation on a first operation unit, causing the robot (3) to be in a movable state based on the operation, the first operation unit allowing the operation at a plurality of locations in a direction of circling around an outer periphery of an arm (13) included in the robot (3).
